# EUROPEAN PATENT SPECIFICATION

(11) **EP 1 142 777 B1**
(45) Date of publication and mention of the grant of the patent: **11.01.2006**
(21) Application number: 01107179.2
(22) Date of filing: 22.03.2001
(51) Int. Cl.: B60J 5/04, B23Q 16/00, B22D 18/00, B60R 21/16, G05B 19/401, B62D 29/00

(54) **A method for producing a light-alloy, in particular a magnesium-alloy, frame for a motor vehicle door, and a frame manufactured thereby**
Ein Verfahren zur Herstellung eines Leichtmetalls, insbesondere einer Magnesium-Legierung, ein Rahmen für eine Kraftfahrzeugtür und ein nach diesem Verfahren hergestellter Rahmen.
Un procédé pour la production d' un alliage léger, en particulier un alliage de magnésium, un cadre pour une porte de véhicule à moteur, et un cadre fabriqué selon ce procédé

(30) Priority: 05.04.2000 IT TO000321
(43) Date of publication of application: 10.10.2001
(73) Proprietor: COMAU S.p.A., 10095 Grugliasco (Torino) (IT)
(72) Inventor: Coppero, Elio, 10090 Rosta (Torino) (IT); Molina, Giuseppe, 10029 Villastellone (Torino) (IT)
(74) Representative: Fioravanti, Corrado

(56) References cited:
- EP-A- 0 776 778
- EP-A- 0 803 389
- DE-A- 4 223 483
- DE-A- 19 648 528
- US-A- 4 876 825

## Description

The present invention relates in general to a door for a motor vehicle and in particular to a door which includes a frame made of a light alloy, such as a magnesium alloy.

More specifically, the invention relates to a method of manufacturing a light-alloy, in particular a magnesium-alloy, frame for a motor vehicle door, in which the frame is to be fitted with an outer skin panel of the door, the frame being produced by forming the light alloy into a casting constituted by front and rear uprights, rigidly connected to each other and intended to face the front or the rear of the vehicle respectively once the door has been fitted.

US 4 876 825 A discloses a casted vehicle door frame with two upstanding legs connected by a boom at their lower points. A premale street with positioning holes is attached to the frame by casting when the frame is moulded.

In the prior art, frames of the type described above require further mechanical operations in order to attach accessory elements. The casting must undergo drilling or welding operations, for example, in order to secure to it the hinge parts which will enable it to move once it has been fitted to the vehicle, or to install guides for a glass window to slide up and down as well as mechanisms for moving the window itself. These operations increase the cost of the door and can lead to a lack of precision in the alignment of the various elements which need to be connected to the frame, since each element is usually fitted individually.

In order to overcome such disadvantages, the object of the present invention is to provide a method of the type described above, characterised in that it includes the steps of:
- defining a geometric reference system for the frame casting, and
- using the said geometric reference system to carry out at least one working step on a plurality of portions of the casting which are to be coupled with accessory elements of the frame.

Thanks to this method, the door frame is manufactured in one piece constituted by a light-alloy casting produced by a known method of die-casting or thixoforming, for example, with the support parts for accessory systems formed in one piece with the casting, so that it is not necessary to connect these parts to the frame at a later stage, as was necessary with prior art frames.

In particular, elements provided for coupling with other accessory elements, such as door hinge parts, supports for the guides for movable window panes or reference tabs for accurately centering the skin panel, can be formed in one piece with the casting during the casting process. The elements formed integrally with the casting are then worked in order to make the dimensions of some parts more accurate, once a single reference system has been established for the frame casting, in order that any work carried out with reference to this system will ensure that the dimensions and alignment of the various parts of the door are highly accurate.

A further object of the invention is to provide a light-alloy, in particular a magnesium-alloy, frame for a motor vehicle door intended to be fitted with an outer skin panel of the door, comprising a casting produced by a light alloy forming process, and having front and rear uprights rigidly connected to each other and intended to face the front and the rear of the vehicle respectively once the door has been fitted,
characterised in that it includes a plurality of parts integral with the casting, which are worked or intended to be worked with reference to a geometric reference system for the casting and are provided for fitting accessory elements to the frame.

Further characteristics and advantages of the invention will become apparent from the detailed description which follows, provided purely by way of non-limitative example with reference to the appended drawings, in which:

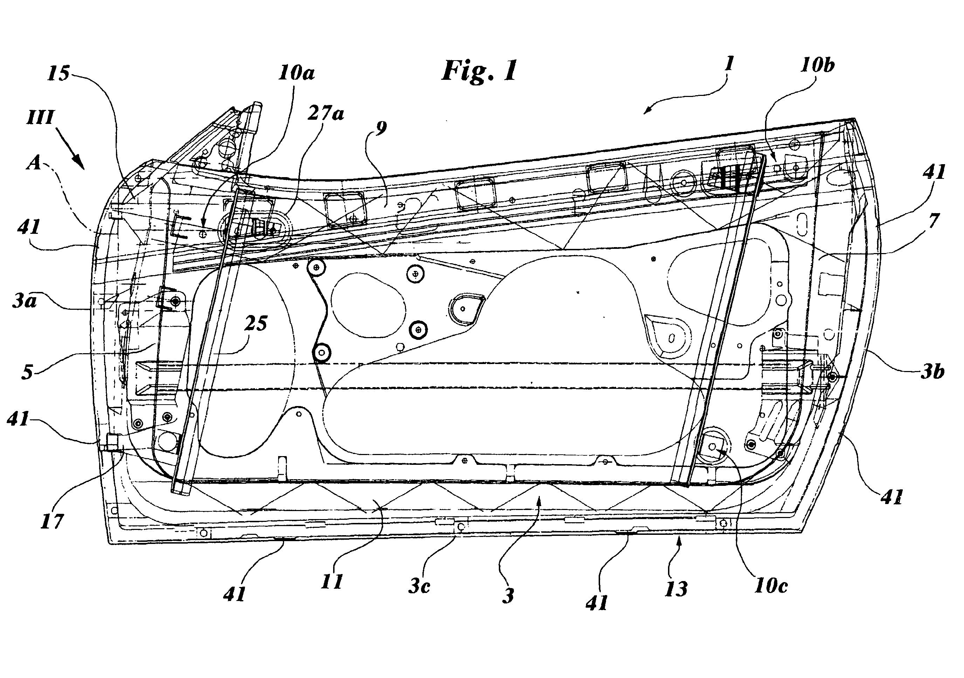

Figure 1 is an elevation schematic side view from inside the door, illustrating the frame fitted with an outer panel,

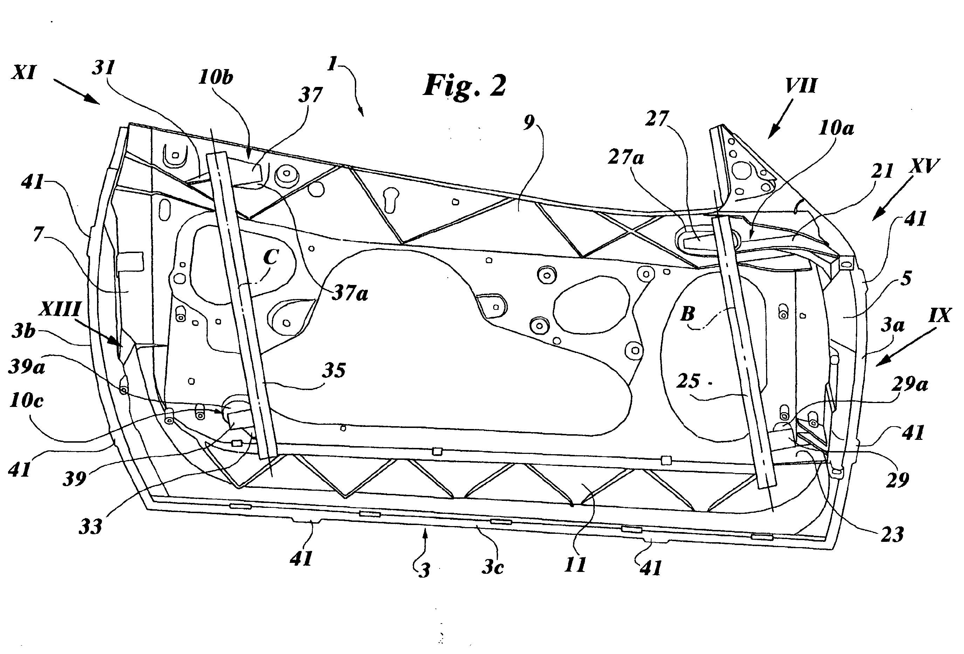

Figure 2 is a similar view to that of Figure 1 from outside the door and without the outer panel,

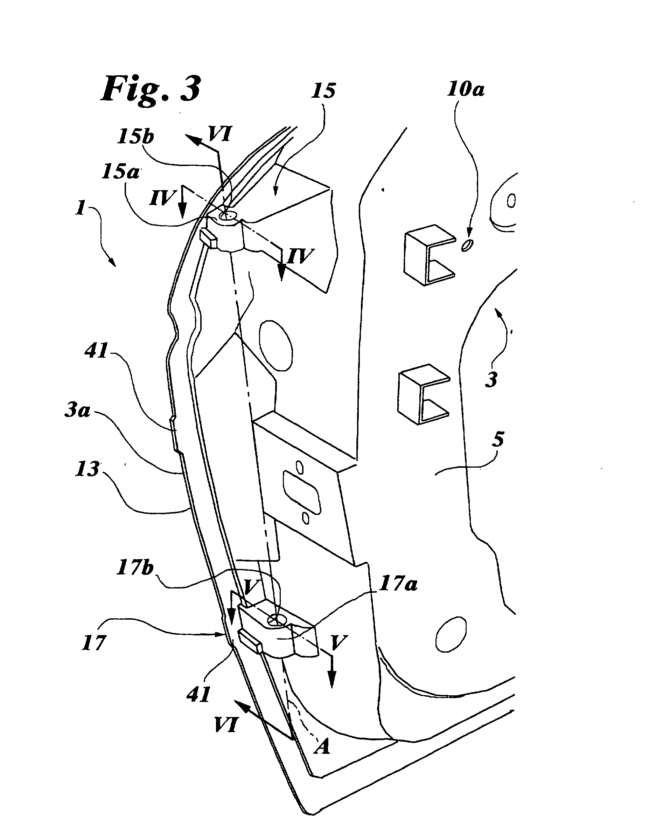

Figure 3 is a perspective view of a detail of the door indicated by the arrow III of Figure 1,

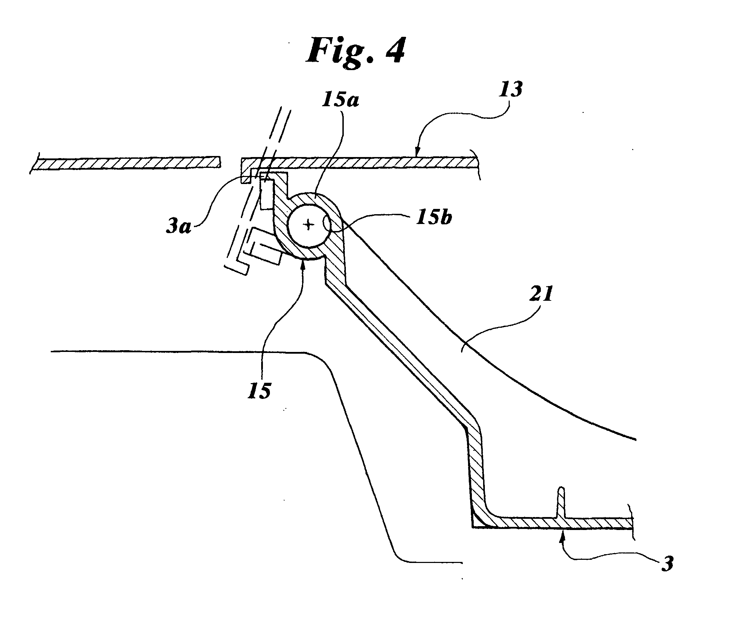

Figure 4 is an elevation sectioned along the line IV-IV of Figure 3,

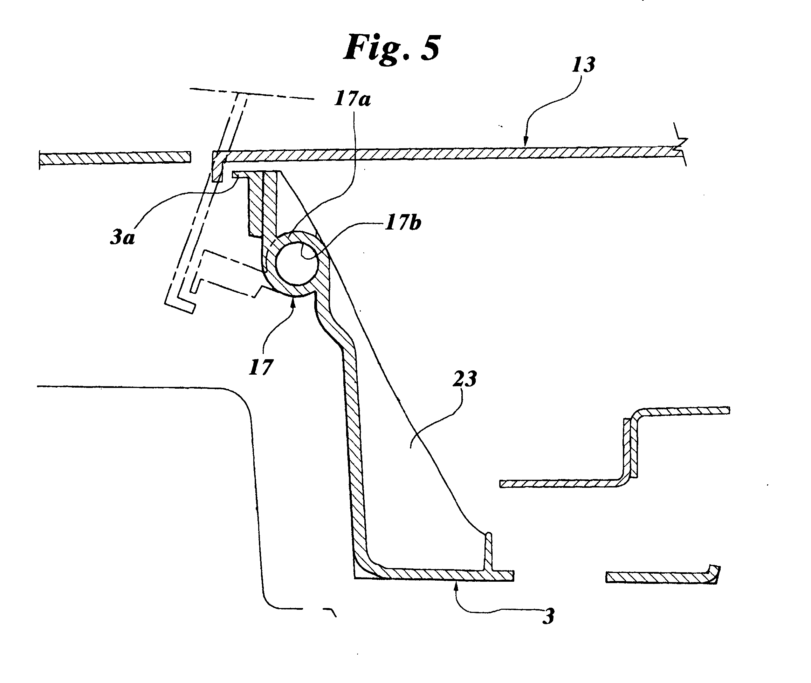

Figure 5 is a view similar to that of Figure 4, with the section taken on the line V-V of Figure 3,
Figure 6 is a schematic and fragmented side elevation, sectioned along the line VI-VI of Figure 3,

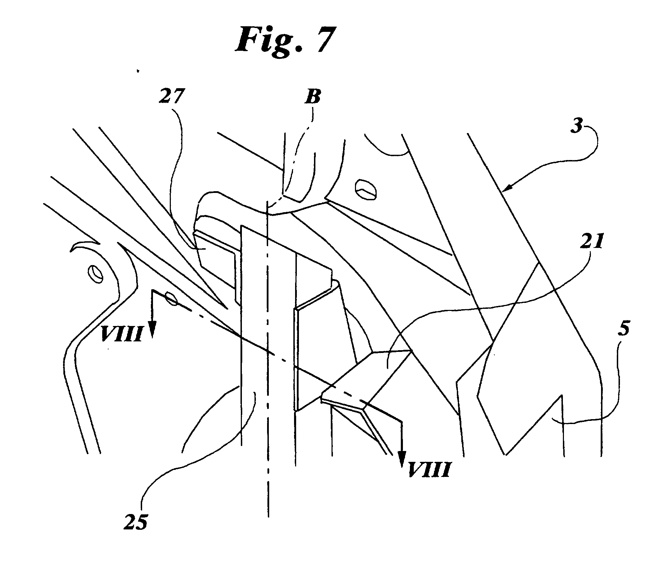

Figure 7 is en enlarged perspective view of a detail indicated by the arrow VII of Figure 2,

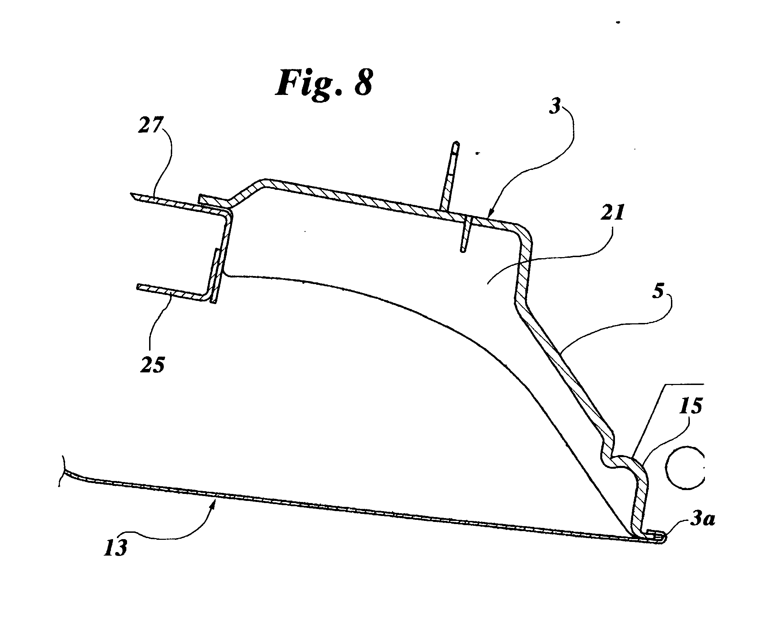

Figure 8 is an elevation sectioned along the line VIII-VIII of Figure 7,

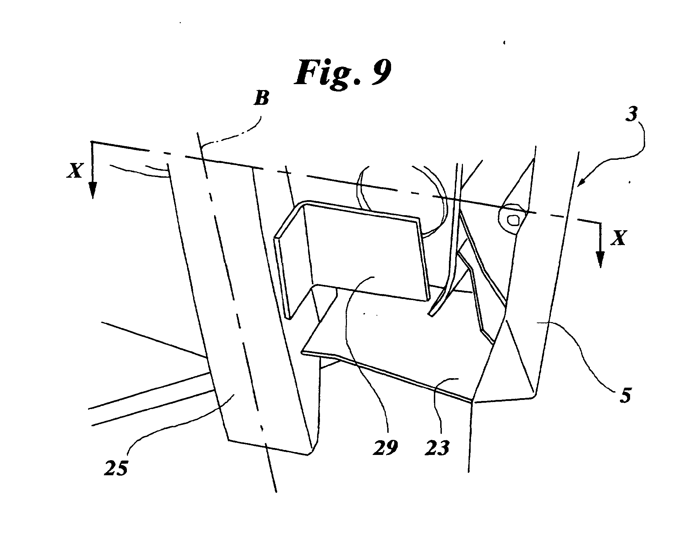

Figure 9 is an enlarged perspective view of a detail indicated by the arrow IX of Figure 2,

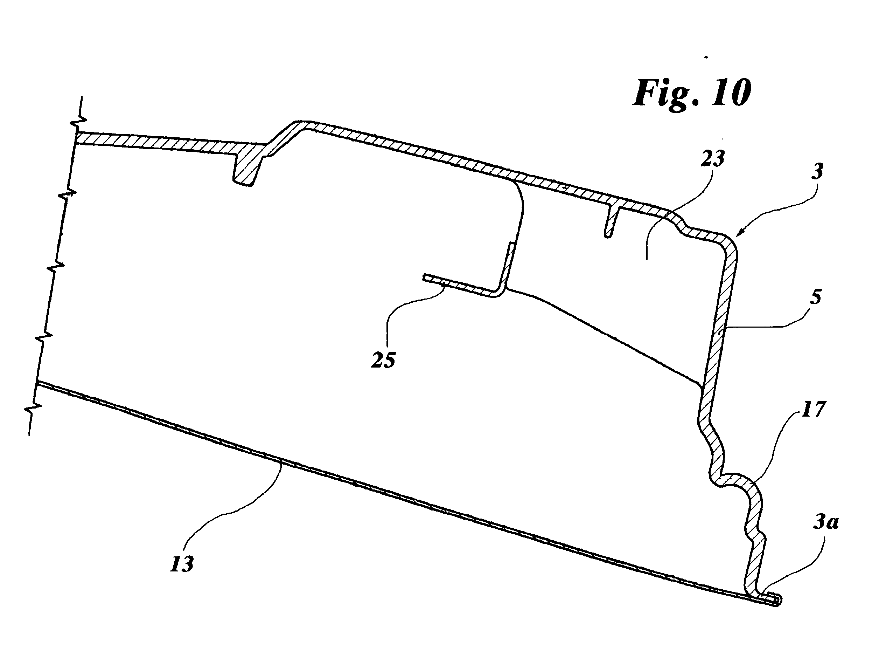

Figure 10 is an elevation sectioned along the line X-X of Figure 9,

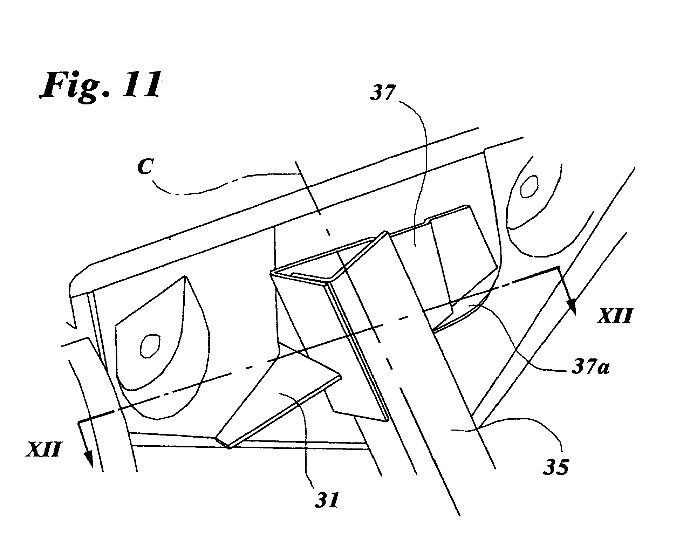

Figure 11 is an enlarged perspective view of a detail indicated by the arrow XI of Figure 2,

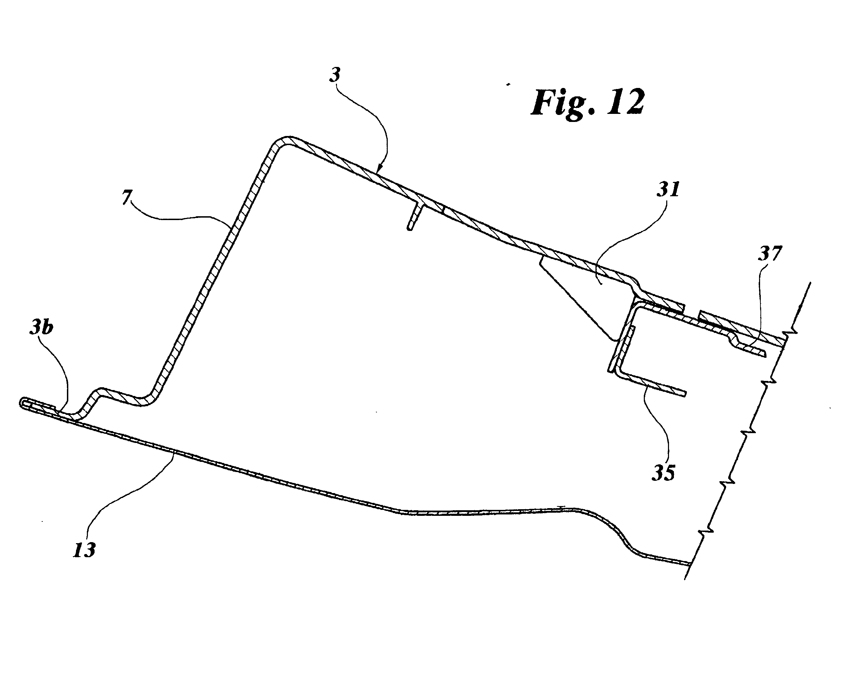

Figure 12 is an elevation sectioned along the line XII-XII of Figure 11,

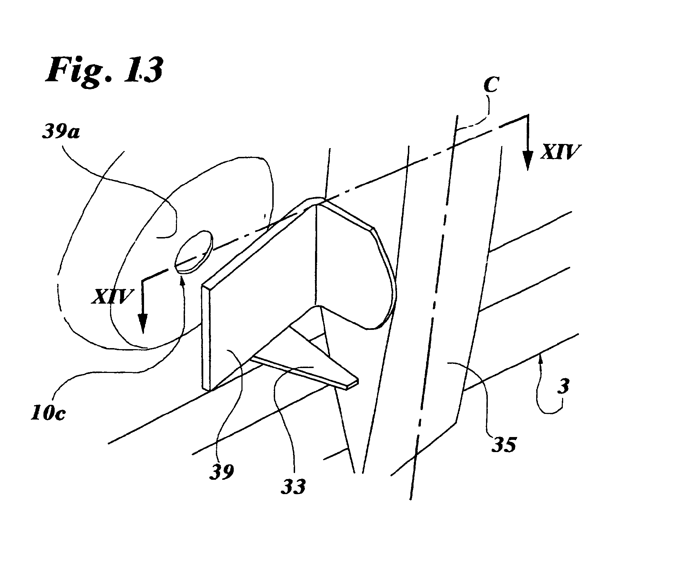

Figure 13 is an enlarged perspective view of a detail indicated by the arrow XIII of Figure 2,

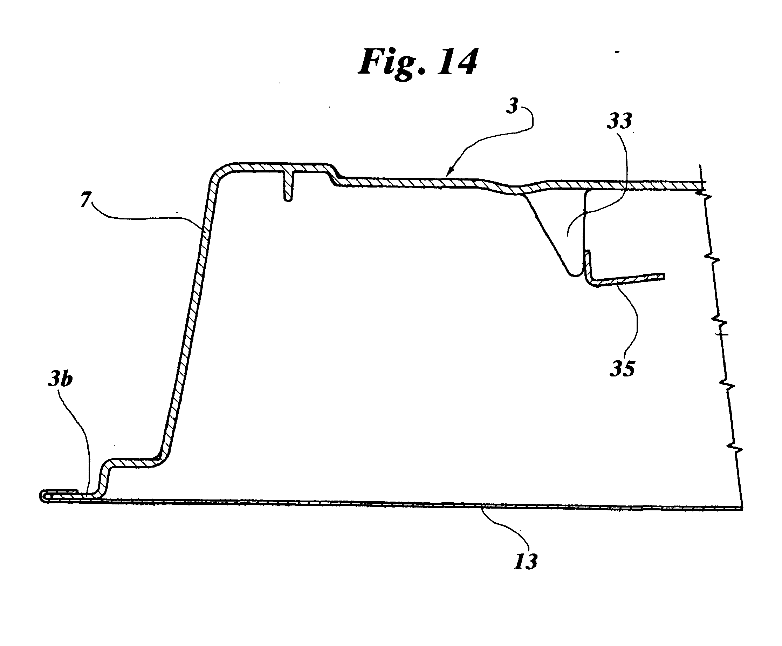

Figure 14 is an elevation sectioned along the line XIV-XIV of Figure 13, and
Figure 15 is an enlarged perspective view of a detail indicated by the arrow XV of Figure 2.

With reference to the figures, a motor vehicle door, specifically a front right door, is generally indicated 1. The door 1 includes a light-alloy, preferably a magnesium-based alloy, frame 3 shaped like a half shell. It includes a front upright 5 and a rear upright 7 which are substantially parallel and rigidly connected at their upper and lower portions by a pair of upper and lower cross members 9 and 11 respectively.

The casting of the frame 3 is made by hot forming the light alloy of which it is made, typically in a die-casting operation, whereby the molten alloy is poured into a die under pressure, or in a thixoforming operation, whereby light-alloy elements are heated to a plastic consistency, whereupon they are compressed into a mould, causing the elements of the frame, in particular the uprights 5, 7 and the cross members 9, 11 to be formed in one piece.

The frame 3 is designed to have a skin panel 13 coupled to its outer side with reference to the orientation of the door once fitted onto a vehicle, the skin panel 13 preferably being constituted by a sheet of plastics material or of metal, for example aluminium.

During the forming of the casting of the frame 3, it is convenient to form a plurality, for example three, main reference formations indicated in figures with 10a, 10b, 10c, the positions of which are used to calculate, by means known per se, a geometrical reference system for the entire casting of the frame 3, like an array of reference axes.

The formations 10a, 10b, 10c marked out during the forming of the frame 3 are preferably intended for engagement by corresponding auxiliary formations of a system (not shown in the drawings) used to support the casting of the frame 3 during mechanical work which must be carried out on the frame 3 once the casting is formed.

By using the geometric reference system calculated for the frame 3 it is possible to carry out a series of mechanical finishing operations, using numerically-controlled automatic machines, for example, to define the geometric tolerances of parts of the casting, intended to be coupled to accessory elements, with extreme precision. With this method, once the accessory elements are fitted to the frame 3, they can be positioned highly accurately relative to the frame 3 by referring to the geometric reference system, without the need for further alignment or balancing operations and thereby keeping down the manufacturing costs of the door 1.

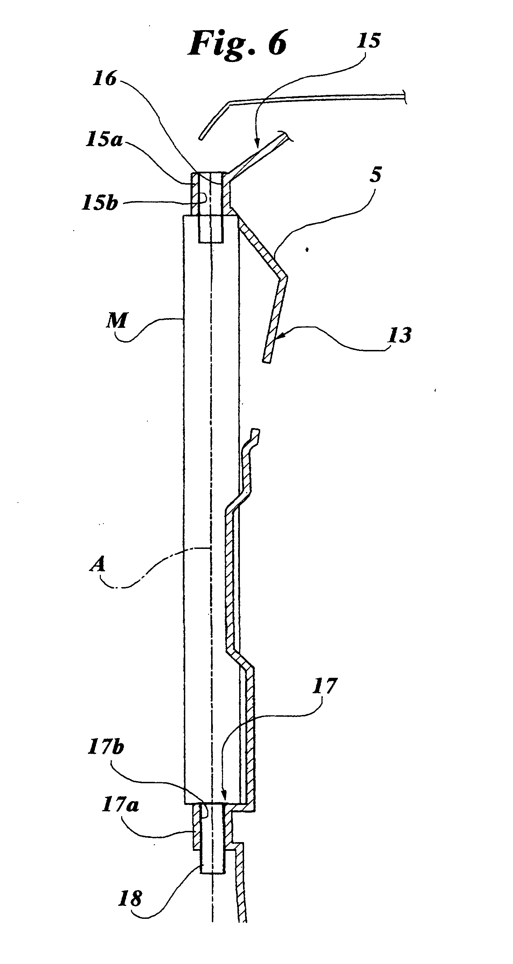

In particular, the casting of the frame 3 has a pair of projections 15 and 17 which extend forwards of the front upright 5 to form a pair of hinge parts 15a and 17a integral with the upright. The projections 15, 17 are then worked, preferably using a single mandrel fitted with a pair of oppositely-facing tips and schematically indicated M in Figure 6, so as to form a pair of holes 15b and 17b aligned with a hinge axis A through the projections 15 and 17.

A metal bush 16, 18, preferably of a resilient steel type, is then inserted into each hinge part 15a and 17a to provide an anti-wear lining for the holes 15b and 17b and to protect the hinge parts 15a and 17a from localised stress caused by the rotation of respective hinge pins (not shown in the drawings) which will be inserted through the holes 15b, 17b to enable the door 1 to pivot relative to the car.

On the side of the frame 3 opposite that on which the projections 15 and 17 are formed, a plurality of bracket-like projections are formed during the casting operation in order to provide a series of accurate supports for positioning a pair of parallel slide guides, with general axes B and C, for the window pane of the door 1. More specifically, the bracket-like projections comprise a pair of projections 21 and 23, upper and lower respectively, arranged near the upright 5 for supporting a front slide guide 25, and a pair projections 31 and 33, upper and lower respectively, arranged near the upright 7 for supporting a rear slide guide 35.

The front guide 25 has an upper bracket 27 and a lower bracket 29 for securing it to respective fixing portions 27a, 29a by fixing means known per se, form fitting or screw means for example. In the same way, the rear guide 35 has an upper bracket 37 and a lower bracket 39 to secure it to fixing portions 37a, 39a formed integrally with the frame 3.

Before positioning the guides 25 and 35 on the frame 3, the edges of the supports 21, 23, 31 and 33 on which they rest are ground with reference to the reference system drawn up when casting the frame 3, in order to ensure that they are accurately parallel. This means that, once the guides 25 and 35 are fitted, their main axes B and C are perfectly aligned with a pair of corresponding axes of the reference system of the frame 3, thereby ensuring that the window-winding system of the door works smoothly.

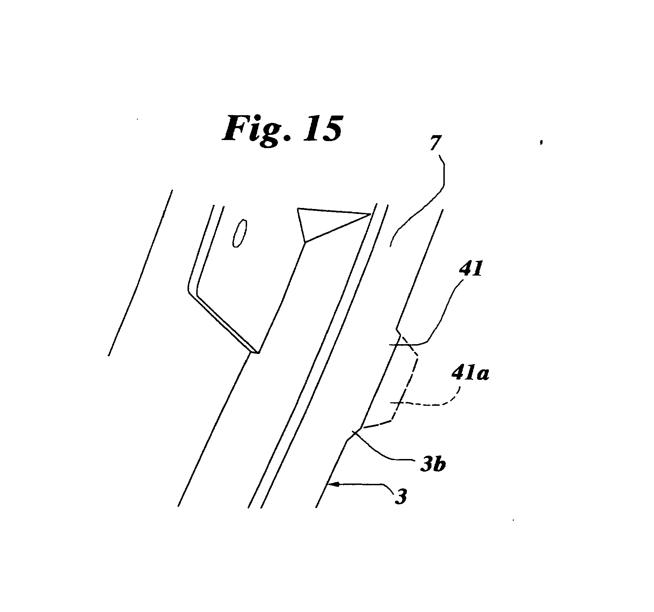

During the casting of the frame 3, a plurality of projecting tabs 41a (see Figure 15) are formed in one piece therewith, along perimetral edges of the frame 3, for example along the vertical edges 3a and 3b and the lower edge 3c. The free ends of the tabs 41 are then cut off with reference to the reference system drawn up for the frame 3, so as to form a series of tabs 41, all extending from the frame 3 by a precisely determined length, and forming elements for centering the panel 13 when it is applied to the outer side of the frame 3. In particular, the tabs 41 are provided for accurately positioning a panel 13 made of plastics material or sheet metal. In the case of a metal panel, which would conveniently be made of an aluminium alloy, three edges of the panel 13 can be folded along the edges 3a, 3b and 3c of the frame 3, in such a way that the panel 13 can be seamed to them, with the fourth edge of the panel being stuck to the upper edge of the frame 3, preferably by means of a semistructural adhesive.

## Claims

1. A method for producing a light-alloy, in particular a magnesium-alloy, vehicle door frame for the door of a motor vehicle, in which the frame (3) is intended to have an outer skin panel (13) of the door (1) associated with it, the method including the steps of:
a) manufacturing the frame (3) by casting the light alloy into a frame having a front upright (5) and a rear upright (7) rigidly connected to each other and intended to face the front and the rear of the motor vehicle respectively once the door (1) has been fitted,
b) casting a plurality of main reference formations (10a, 10b, 10c) in the frame for engagement by corresponding auxiliary formations on a structure for supporting the frame during mechanical work to be carried out on the frame (3) once the frame is casted, the positions of said main formations (10a, 10b, 10c) defining a geometric reference system for the frame (3), and
c) using the said geometric reference system to work a plurality of portions (15, 17, 21, 23, 31, 33, 41) of the frame intended for coupling to accessory parts of the frame (3),
**characterised in that** said main formations (10a, 10b, 10c) are formed in the frame during the step (a) of casting the frame (3).

2. A method according to Claim 1, **characterised in that** it includes the steps of casting on the frame a pair of projections (15, 17) integrally with one of the said uprights (5) and of drilling each of the projections (15, 17) so as to form a hole (15b, 17b) through each, coaxial with an axis (A) determined on the geometric reference system and thereby constituting a pair of aligned hinge parts (15a, 17a) integral with the frame (3) of the door (1).

3. A method according to Claim 2, **characterised in that** the drilling of the said holes (15b, 17b) is carried out with a twin-tip mandrel interposed between the said projections (15, 17) .

4. A method according to Claim 2, **characterised in that** the said projections (15, 17) project forwards from the front upright (5) of the frame casting (3).

5. A method according to any one of Claims 1 to 4, **characterised in that** a metal bush (16, 18) is inserted into each of the said holes (15b, 17b) for the rotation of an associated hinge pin for the door (1).

6. A method according to Claim 5, **characterised in that** the said metal bush is a resilient steel bush (16, 18) for protecting the associated hinge part (15a, 17a) from wear.

7. A method according to Claim 1, **characterised in that** it includes the step of casting support members (21, 23, 31, 33) in one piece with the frame for fitting slide guides (25, 35) for a window pane in the door (1) and of grinding the said support members (21, 23, 31, 33) with reference to the geometric reference system to ensure their alignment with a pair of parallel axes (B, C) determined by the reference system.

8. A method according to Claim 7, **characterised in that** it includes the step of fixing the slide guides (25, 35) near the said support members (21, 23, 31, 33) by means of form fitting and/or screw fixing means.

9. A method according to Claim 1, **characterised in that** it includes the steps of casting a plurality of integral locating tabs (41a) on the edges of the frame (3) for ensuring that the outer skin panel (13) of the door (1) is accurately positioned in relation to the frame (3), and of cutting the ends of these tabs (41a), with reference to the geometric reference system, to ensure that these projections (41) are accurately positioned.

## Patentansprüche

1. Verfahren für die Herstellung eines Fahrzeugtürrahmens für die Türe eines Kraftfahrzeugs aus einer Leichtmetalllegierung, im Besonderen aus einer Magnesiumlegierung, wobei der Rahmen (3) so vorgesehen ist, dass er eine äußere Verkleidungsplatte (13) der Türe (1) besitzt, die ihm zugeordnet ist, wobei das Verfahren folgende Schritte aufweist:
a) Herstellen des Rahmens (3) durch Gießen der Leichtmetalllegierung zu einem Rahmen, der einen vorderen Steher (5) und einen hinteren Steher (7) besitzt, die miteinander starr verbunden und so vorgesehen sind, dass sie zur Vorderseite bzw. zur Hinterseite des Kraftfahrzeugs gerichtet sind, wenn die Türe (1) einmal montiert ist,
b) Gießen einer Vielzahl von Hauptbezugsausformungen (10a, 10b, 10c) im Rahmen, um in entsprechende Hilfsausformungen auf einem Aufbau einzugreifen, der den Rahmen während einer mechanischen Bearbeitung hält, die auf dem Rahmen (3) ausgeführt wird, wenn der Rahmen einmal gegossen ist, wobei die Anordnungen der Hauptausformungen (10a, 10b, 10c) ein geometrisches Bezugssystem für den Rahmen (3) festlegen, und
c) Verwenden des geometrischen Bezugssystems, um eine Vielzahl von Teilen (15, 17, 21, 23, 31, 33, 41) des Rahmens zu bearbeiten, die dazu vorgesehen sind, um die Zusatzteile mit dem Rahmen (3) zu verbinden,
**dadurch gekennzeichnet, dass** die Hauptausformungen (10a, 10b, 10c) im Rahmen während jenes Schritts (a) ausgebildet werden, in dem der Rahmen (3) gegossen wird.

2. Verfahren gemäß Anspruch 1, **dadurch gekennzeichnet, dass** das Verfahren Schritte ausweist, in denen auf den Rahmen ein Paar von Vorsprüngen (15, 17) gegossen wird, die mit einem der Steher (5) gemeinsam ausgebildet sind, und in denen jeder der Vorsprünge (15, 17) so gebohrt wird, dass durch jeden Vorsprung eine Öffnung (15b, 17b) ausgebildet wird, die koaxial mit einer Achse (A) verläuft, die auf dem geometrischen Bezugssystem festgelegt ist, wodurch ein Paar von ausgerichteten Gelenksteilen (15a, 17a) gebildet wird, die mit dem Rahmen (3) der Türe (1) gemeinsam ausgebildet sind.

3. Verfahren gemäß Anspruch 2, **dadurch gekennzeichnet, dass** das Bohren der Öffnungen (15b, 17b) mit einem Dorn mit zwei Spitzen ausgeführt wird, der zwischen die Vorsprünge (15, 17) eingesetzt wird.

4. Verfahren gemäß Anspruch 2, **dadurch gekennzeichnet, dass** diese Vorsprünge (15, 17) vom vorderen Steher (5) des Rahmengussstücks (3) nach vorne aufragen.

5. Verfahren gemäß irgendeinem der Ansprüche 1 bis 4, **dadurch gekennzeichnet, dass** eine Metallbuchse (16, 18) in jede der Öffnungen (15b, 17b) für die Drehung eines zugeordneten Gelenkszapfen für die Türe (1) eingesetzt wird.

6. Verfahren gemäß Anspruch 5, **dadurch gekennzeichnet, dass** die Metallbuchse eine elastische Stahlbuchse (16, 18) ist, um den zugeordneten Gelenksteil (15a, 17a) vor einer Abnützung zu schützen.

7. Verfahren gemäß Anspruch 1, **dadurch gekennzeichnet, dass** das Verfahren einen Schritt aufweist, in dem Halteelemente (21, 23, 31, 33) in einem Stück mit dem Rahmen gegossen werden, um Gleitführungen (25, 35) für eine Fensterscheibe in der Türe (1) aufzunehmen, und in dem die Halteelemente (21, 23, 31, 33) im Hinblick auf das geometrische Bezugssystem geschliffen werden, um ihre Ausrichtung mit einem Paar von parallelen Achsen (B, C) sicher zu stellen, die vom Bezugssystem festgelegt werden.

8. Verfahren gemäß Anspruch 7, **dadurch gekennzeichnet, dass** das Verfahren einen Schritt aufweist, in dem die Gleitführungen (25, 35) in der Nähe der Halteelemente (21, 23, 31, 33) mit Hilfe eines Formsitzes und/oder mit Schraubenbefestigungseinrichtungen befestigt werden.

9. Verfahren gemäß Anspruch 1, **dadurch gekennzeichnet, dass** das Verfahren Schritte aufweist, in denen eine Vielzahl von integrierten Einstelllaschen (41a) auf den Kanten des Rahmens (3) gegossen wird, um sicher zu stellen, dass die äußere Verkleidungsplatte (13) der Türe (1) im Hinblick auf den Rahmen (3) genau angeordnet ist, und in denen die Enden dieser Laschen (41a) im Hinblick auf das geometrische Bezugssystem beschnitten werden, um sicher zu stellen, dass diese Vorsprünge (41) genau angeordnet sind.

## Revendications

1. Procédé pour la production d'un châssis de portière de véhicule en alliage léger, en particulier un châssis en alliage de magnésium, pour la portière d'un véhicule automobile, dans lequel le châssis (3) est destiné à comporter un panneau de bordage extérieur (13) de la portière (1) associée à celui-ci, le procédé comprenant les étapes consistant à :
a) fabriquer le châssis (3) par coulée de l'alliage léger dans un châssis présentant un montant avant (5) et un montant arrière (7) raccordés de façon rigide entre eux et destinés à faire face à l'avant et à l'arrière du véhicule automobile, respectivement, dès que la portière (1) a été montée,
b) couler une pluralité de formations de référence principales (10a, 10b, 10c) dans le châssis pour l'engagement par des formations auxiliaires correspondantes sur une structure pour supporter le châssis pendant le travail mécanique à effectuer sur le châssis (3) dès que le châssis est coulé, les positions desdites formations principales (10a, 10b, 10c) définissant un système de références géométriques pour le châssis (3), et
c) utiliser ledit système de références géométriques pour travailler une pluralité de portions (15, 17, 21, 23, 31, 33, 41) du châssis destinées au raccordement aux pièces accessoires du châssis (3),
**caractérisé en ce que** lesdites formations principales (10a, 10b, 10c) sont formées dans le châssis pendant l'étape (a) de coulée du châssis (3).

2. Procédé selon la revendication 1, **caractérisé en ce qu'**il comprend les étapes consistant à couler sur le châssis une paire de saillies (15, 17) solidairement avec l'un desdits montants (5) et de percer chacune desdites saillies (15, 17) de façon à former un trou (15b, 17b) à travers chacun, de façon coaxiale à l'axe (A) déterminé sur le système de références géométriques, et constituer ainsi une paire de pièces d'articulations à charnière alignées (15a, 17a) solidaires du châssis (3) de la portière (1).

3. Procédé selon la revendication 2, **caractérisé en ce que** le perçage desdits trous (15b, 17b) est effectué avec un mandrin à pointes jumelles intercalé entre lesdites saillies (15, 17).

4. Procédé selon la revendication 2, **caractérisé en ce que** lesdites saillies (15, 17) font saillie vers l'avant à partir du montant avant (5) de la coulée de châssis (3).

5. Procédé selon l'une quelconque des revendications 1 à 4, **caractérisé en ce qu'**un manchon métallique (16, 18) est inséré dans chacun desdits trous (15b, 17b) pour la rotation d'un axe d'articulation à charnière associée pour la portière (1).

6. Procédé selon la revendication 5, **caractérisé en ce que** ledit manchon métallique est un manchon en acier élastique (16, 18) pour protéger la partie d'articulation à charnière associée (15a, 17a) contre l'usure.

7. Procédé selon la revendication 1, **caractérisé en ce qu'**il comprend l'étape consistant à couler des éléments de support (21, 23, 31, 33) en une pièce avec le châssis pour le montage de guidages coulissants (25, 35) pour une vitre de fenêtre dans la portière (1) et le meulage desdits éléments de support (21, 23, 31, 33) en référence au système de références géométriques, pour assurer leur alignement sur une paire d'axes parallèles (B, C) déterminés par le système de référence.

8. Procédé selon la revendication 7, **caractérisé en ce qu'**il comprend l'étape consistant à fixer les guidages coulissants (25, 35) à proximité desdits éléments de support (21, 23, 31, 33) au moyen d'éléments de fixation par vis et/ou par ajustement de format.

9. Procédé selon la revendication 1, **caractérisé en ce qu'**il comprend les étapes consistant à couler une pluralité de languettes de positionnement solidaires (41a) sur les bords du châssis (3) pour assurer que le panneau de bordage extérieur (13) de la portière (1) soit positionné avec précision par rapport au châssis (3) et pour découper les extrémités de ces languettes (41a) en référence au système des références géométriques pour assurer que ces saillies (41) sont positionnées avec précision.
